# EUROPEAN PATENT APPLICATION

(11) **EP 4 086 219 A1**
(43) Date of publication of application: **09.11.2022**
(21) Application number: 21172349.9
(22) Date of filing: 05.05.2021
(51) Int. Cl.: B66F 7/26, B66F 9/18, B60L 53/80, B66F 9/075

(54) **LIFTING TOOL FOR BATTERY PACK**

(71) Applicant: Volvo Bus Corporation, 405 08 Göteborg (SE)
(72) Inventor: MAGNUSSON, Björn, 661 92 SÄFFLE (SE); ÅKESSON, Conny, 504 93 Borås (SE); WALLENBERG, Sebastian, 413 05 GÖTEBORG (SE)
(74) Representative: Zacco Sweden AB

(57) **Abstract**

A lifting tool for replacing a battery pack in an electric vehicle, comprising a body having a lifting interface that is attachable to an external lifting aid, further comprising a first arm provided with a first lifting arrangement and a second arm provided with a second lifting arrangement, where the battery pack is adapted to be positioned between the arms when the lifting tool is to lift and hold a battery pack, where the lifting tool comprises locking pins adapted to be inserted horizontally through the lifting arrangements of the lifting tool and the lifting openings of the battery pack, such that the locking pins secure the battery pack to the lifting tool.

## Description

### TECHNICAL FIELD

The present invention relates to a lifting tool to be used when replacing a battery pack in an electric vehicle. By using the lifting tool, a battery pack can be removed from and inserted to confined spaces from the side of the vehicle.

### BACKGROUND ART

Electric vehicles are getting more and more popular. Electric passenger cars are widely used, and also electric buses used in urban areas are slowly increasing in numbers. An advantage of using electric buses in urban areas is that the travelled distance is relatively short, and there are end stations where the charge of the battery can be replenished. The battery may even be replenished at some of the bus stops with a quick charger.

One disadvantage of urban electric buses is that the wear of the battery is higher than in passenger cars. An electric bus is heavier than a passenger car, the required power to drive the bus is higher and the battery must thus be larger. Further, the charging current of the battery must be high in order to keep the buses rolling without many delays. The wear of the battery is thus relatively large.

The battery pack or packs of a bus must thus be relatively easy to exchange, both when the battery pack must be replaced and when the battery is to be removed for service. A battery pack of a bus may weigh up to 600 kg and more, and the bus may comprise more than one such battery pack. Further, the space around the battery pack is limited, which means that it may be difficult to reach the sides or the rear side of the battery pack when the battery pack is to be removed.

US 5664932 describes an underground mining vehicle provided with a replaceable battery pack and a pivoted lifting device mounted to the vehicle. Two arms arranged on each side of the battery pack lifts a replaced battery pack from ground up to the use position for the battery pack. This battery replacement system works fine for this type of vehicle, but has several disadvantages for other vehicles. The lifting device is relatively heavy when compared to the weight of the battery pack. Further, the lifting device is relatively large and takes up useful space, and finally, the battery is to be used outside of the vehicle.

SE 201350751 discloses a carrier frame for a battery pack of a reach truck. The battery pack stands on the carrier frame both when loading/unloading the battery pack and when in use in the reach truck. A forklift will lift the carrier frame with the battery pack by the underside of the carrier frame.

US 20150114736 describes a quick loading and unloading battery system for electric vehicles, where two lift arms holds the sides of the battery through longitudinal openings. The arms are provided on a lift jack that lifts the battery and positions the battery on specific mounts in the vehicle.

These different battery lifting assemblies functions well for the specific use they are designed for, but require relatively large room around the battery pack when removing and mounting the battery pack, and are only suitable for vehicles having a single battery pack.

There is thus room for an improved lifting tool for a battery pack.

### DISCLOSURE OF INVENTION

An object of the invention is therefore to provide an improved lifting tool for a battery pack. A further object of the invention is to provide an improved method for replacing a battery pack.

The solution to the problem according to the invention is described in the characterizing part of claim 1 regarding the lifting tool and in claim 11 regarding the method. The other claims contain advantageous further developments of the inventive lifting tool and method.

In an lifting tool for replacing a battery pack in an electric vehicle, comprising a body having a lifting interface that is attachable to an external lifting aid, further comprising a first arm provided with a first lifting arrangement and a second arm provided with a second lifting arrangement, where the battery pack is adapted to be positioned between the arms when the lifting tool is to lift and hold a battery pack, the object of the invention is achieved in that the lifting tool comprises a first locking pin and a second locking pin, where the first locking pin is adapted to be inserted horizontally through a first outer connection member and a first inner connection member of the first lifting arrangement and a first outer lifting opening and a first inner lifting opening of a first side of the battery pack, and where the second locking pin is adapted to be inserted horizontally through a second outer connection member and a second inner connection member of the second lifting arrangement and a second outer lifting opening and a second inner lifting opening of a second side of the battery pack, such that the locking pins secure the battery pack to the lifting tool.

With the lifting tool according to the invention, a battery pack for an electric vehicle can easily be removed from the vehicle or inserted into the vehicle even if the space around the battery pack is limited. This is advantageous especially for heavy vehicles having a large and heavy battery pack that is rectangular, and that is designed to be replaced in an easy manner. Battery packs in passenger cars are often integrated in the design of the vehicle and are not intended to be replaced. It is often difficult to reach and to remove such a battery pack. The battery pack in passenger cars is also often divided in several parts placed at different locations in the passenger cars, in order to use the available space and/or to lower the centre of gravity. In a heavy vehicle, the battery pack is often rectangular and if several battery packs are used, they are often the same size and type. In an electric bus, two or three battery packs may be used, e.g. two stacked on top of each other at the rear of the bus, and one arranged under the floor. The battery packs at the rear are reached from the rear of the bus, and the battery pack under the floor is reached from one side of the bus.

With the inventive lifting tool, the battery pack can be lifted in a compact manner. The lifting tool comprises two lifting arms that are arranged spaced apart in a sideway direction such that they can be positioned on each side of the battery pack. Each arm comprises outer and inner connection members that are adapted to cooperate with outer and inner lifting openings in the frame brackets of the battery pack. With the connection members and the lifting openings aligned, locking pins are inserted through the connection members and the lifting openings, which secures the battery pack to the lifting arms. The battery pack can then safely be removed from the vehicle. In this way, it is possible to attach the battery pack to the lifting arms from the outside of the vehicle without requiring access to the inner side of the battery. The space of the vehicle can thus be used in a more efficient way.

The lifting arms are mounted to the body of the lifting tool. The body is in one example adapted to be carried by a forklift and comprises in this example two tubes into which the forks of the forklift are inserted. With the forklift, the battery pack can be removed from or inserted into the vehicle.

In another example, the body comprises a lower frame adapted to be placed on a pallet loader or the like. The pallet loader can be raised or lowered manually by an operator such that the battery pack can be removed from or inserted into the vehicle. The arms of the lifting tool may be attached at different height positions of the body such that the lifting tool can be adapted to battery packs arranged at different heights. With a pallet loader, the height of the lifting tool can be fine-tuned manually when lifting a battery pack.

The outer and inner connection members of the lifting arms may be arranged on the lower side of the arms, extending downwards for the arms. In this example, the connection members comprises holes that corresponds to the lifting openings of the battery pack. The holes of the connection members and the lifting openings of the battery pack are aligned with each other and the locking pins are inserted through the holes and openings, such that the battery pack is securely attached to the lifting arms of the lifting tool. By placing the connection member either on both inner sides or both outer sides of the frame bracket of the battery pack, the battery pack will be secured in both horizontal directions. In this way, the battery pack will also be secured in a vertical direction.

The connection members may also be integrated in the lifting arms, where at least the outer connection members form a recess in the lifting arms. The inner connection members may also be recesses or may be holes at the front end of the lifting arms. By using at least one recess, the battery pack will be secured in both horizontal directions. In this way, the battery pack will also be secured in a vertical direction.

In a method for manually removing a battery pack from an electric vehicle with a lifting tool, the steps of; positioning the battery pack between a first arm and a second arm of the lifting tool when the battery is positioned in the electric vehicle, adjusting the arms in height such that lifting arrangements of the arms are positioned adjacent and aligned with lifting openings of each side of the battery pack, inserting a locking pin through the lifting arrangements of each arm and the lifting openings of each side of the battery pack, lifting the battery pack with a lifting aid attached to the lifting tool, and removing the battery pack from the vehicle with the lifting aid are comprised.

By this first embodiment of the method, a battery pack in an electric vehicle can easily be removed from the vehicle by an operator. The battery pack is securely attached to the lifting arms of the lifting tool and held by the lifting tool during the removal of the battery pack. The battery pack is secured in both horizontal directions and in the vertical direction. The battery pack is secured to the lifting tool by the use of locking pins that are mounted to the battery pack from the outside of the vehicle. The battery pack can thus be attached to the lifting tool from the outside and does not require access to the inner part of the battery pack. This simplifies the attachment of the battery pack to the lifting tool.

### BRIEF DESCRIPTION OF DRAWINGS

The invention will be described in greater detail in the following, with reference to the attached drawings, in which
- Fig. 1: shows an example of a lifting tool according to the invention holding a battery pack,
- Figs. 2a-2c: show a battery pack being attached to the lifting tool of Fig. 1,
- Fig. 3: shows another example of a lifting tool according to the invention holding a battery pack,
- Figs. 4a-4c: show a battery pack being attached to the lifting tool of Fig. 3, and
- Fig. 5: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims. The references to outer and inner refers to the position of a battery pack mounted in a vehicle.

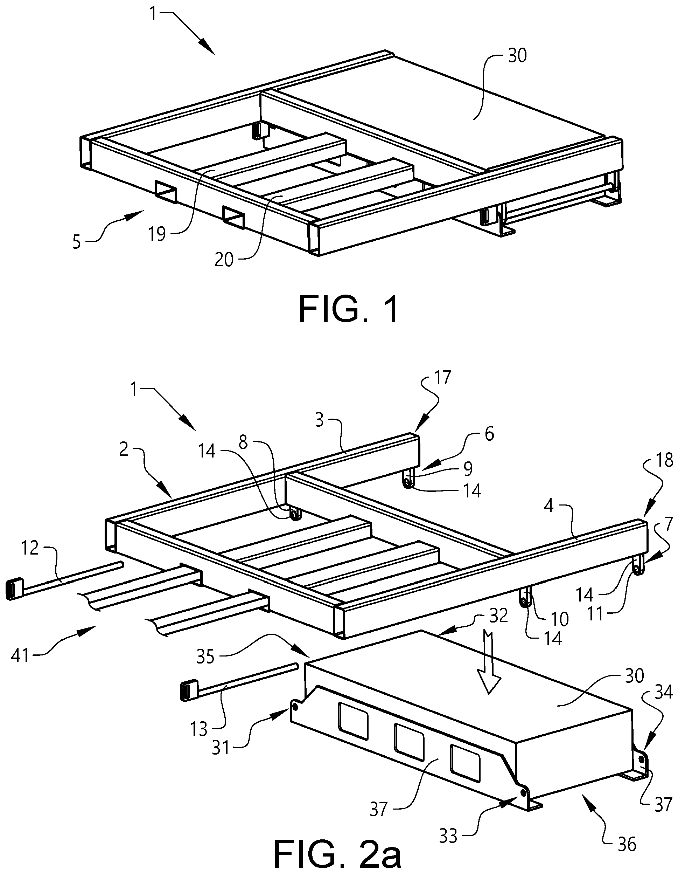

Fig. 1 shows a first example of a lifting tool that is intended to be used when replacing a battery pack in an electric vehicle, preferably a heavy vehicle such as a bus or a truck. The lifting tool 1 comprises a body 2 that is provided with a lifting interface 5, which is used to attach the lifting tool to an external lifting aid 41. The external lifting aid can be e.g. an electric forklift or a manually operated pallet loader or the like. The lifting aid is used to rise and lower the lifting tool to the height of the battery pack, such that the lifting tool can be attached to the battery pack. In the example shown in Fig. 1, the lifting interface consists of two horizontal longitudinal tubes 19, 20 mounted to the body of the lifting tool. The forks of a forklift are to be inserted into the tubes 19, 20 when a battery pack 30 is to be lifted. The cross section of the tubes 19, 20 is thus rectangular, and the length is long enough to provide a stable holding of a battery pack. The tubes are preferably provided with a closed inner end such that the battery pack is not damaged if a forklift with long forks is used.

The lifting tool comprises a first lifting arm 3 provided with a first lifting arrangement 6 and a second lifting arm 4 provided with a second lifting arrangement 7. The first arm and the second arm extends forwards from the body of the lifting tool. The distance between the arms corresponds to the width of a battery pack, such that a battery pack fits snuggly between the lifting arms. The lifting arrangements of the lifting arms are used to attach a battery pack to the lifting arms.

In the shown example, the first lifting arrangement 6 comprises a first outer connection member 8 that is positioned at the rear end of the first arm and that extends downwards from the first arm, and a first inner connection member 9 that is positioned at the front end of the first arm and that extends downwards from the first arm. The second lifting arrangement 7 comprises a second outer connection member 10 that is positioned at the rear end of the second arm and that extends downwards from the second arm, and a second inner connection member 11 that is positioned at the front end of the second arm and that extends downwards from the second arm. In this example, the connection members are flat brackets welded to the underside of the lifting arms, but other implementations are also possible. All connection members are provided with a hole 14 with a diameter that corresponds to a locking pin that is used to attach a battery pack to the lifting tool. The holes of an outer connection member and an inner connection member are aligned with each other. The distance between the outer connection member and the inner connection member of an arm corresponds in the shown example to the depth of a battery pack, but it is possible to position the lifting openings of a battery pack at other positions.

The battery pack 30 is in the shown example rectangular and is a relatively large battery pack with a high weight that requires some kind of lifting aid to handle. A typical battery pack for a heavy vehicle may have a weight of over 500 kg or more. The battery pack is provided with two brackets 37, one on the front side and one on the rear side of the battery pack. The bracket extends outside of the first side 35 and the second side 36 of the battery pack. These extensions are at the first side 35 provided with a first outer lifting opening 31 and a first inner lifting opening 32 and are at the second side 36 provided with a second outer lifting opening 33 and a second inner lifting opening 34. These lifting openings are adapted to align with the connection members of the lifting tool.

When a battery pack is to be removed or replaced, the lifting tool is picked up by a lifting aid, in this case a forklift, where the forks of the forklift are inserted into the tubes 19, 20 of the lifting tool. The lifting tool is lowered towards the battery pack, as shown in Fig. 2a, such that the holes of the connection members are aligned with the lifting openings of the battery pack. The first outer connection member 8 will be positioned adjacent and aligned with the first outer lifting opening 31, the first inner connection member 9 will be positioned adjacent and aligned with the first inner lifting opening 32, the second outer connection member 10 will be positioned adjacent and aligned with the second outer lifting opening 33, and the second inner connection member 11 will be positioned adjacent and aligned with the second inner lifting opening 34. By positioning the connection members between the brackets, the battery pack is secured in both horizontal directions and in the vertical direction.

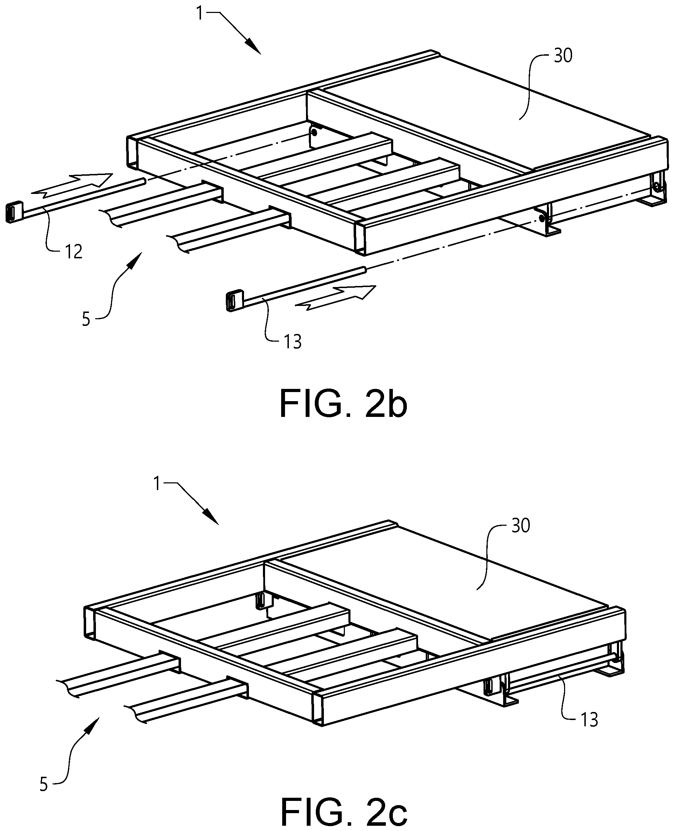

To attach the battery pack to the lifting tool, as shown in Fig. 2b, the first locking pin 12 is inserted through the first outer lifting opening 31, the first outer connection member 8, the first inner connection member 9 and the first inner lifting opening 32. The second locking pin 13 is inserted through the second outer lifting opening 33, the second outer connection member 10, the second inner connection member 11 and the second inner lifting opening 33. The battery pack is now securely attached to the lifting tool, as shown in Fig. 2c, and can be moved to the desired position, either out of the vehicle or into the vehicle. A locking pin may be provided with a locking member that secures the locking pin to the lifting tool, such that the locking pin cannot displace accidentally. However, the weight of the battery pack and the friction between the locking pins and the connection members/lifting openings will prevent the locking pins from moving accidentally.

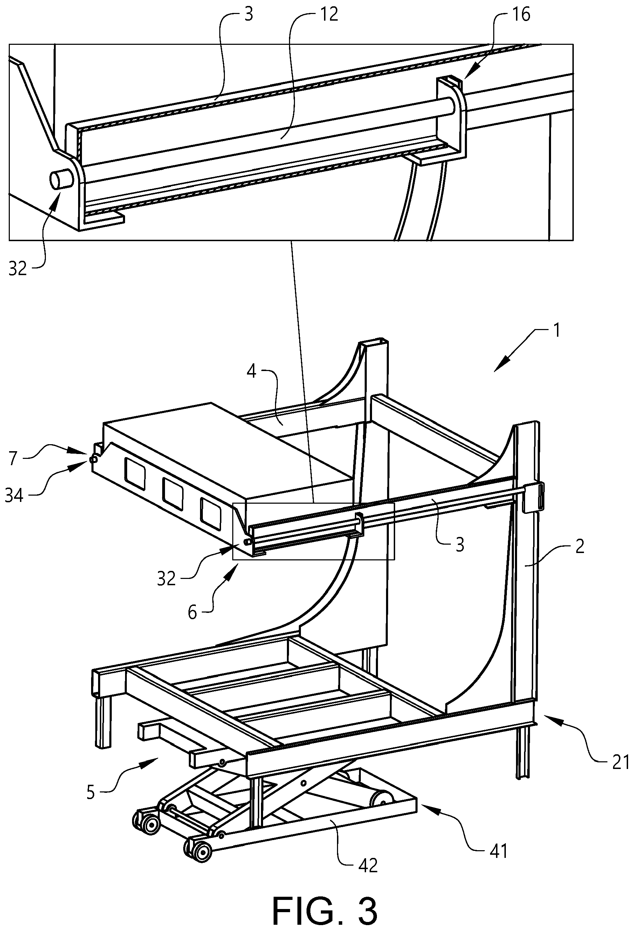

Fig. 3 shows a second example of a lifting tool. The lifting tool 1 comprises a body 2 that is provided with a lifting interface 5, which is used to attach the lifting tool to an external lifting aid 41. In the example shown in Fig. 3, the lifting interface consists of a lower platform 21 mounted to the body of the lifting tool. The lower platform is intended to interact with e.g. a pallet loader when a battery pack 30 is to be lifted. The pallet loader is placed under the platform and is raised to adjust the height of the lifting arms of the lifting tool. The advantage of using a manually operated pallet loader is that the precision of a manually operated lift device is higher than for a forklift, which may be of advantage when the battery is to be inserted into a limited space. The lifting tool may be securely attached to the pallet loader with e.g. clamps to improve the stability.

The lifting tool comprises a first lifting arm 3 provided with a first lifting arrangement 6 and a second lifting arm 4 provided with a second lifting arrangement 7. The first arm and the second arm extends forwards from the body of the lifting tool. The distance between the arms corresponds to the width of a battery pack, such that a battery pack fits snuggly between the lifting arms. The lifting arrangements of the lifting arms are used to attach a battery pack to the lifting arms.

In the shown example, the first lifting arrangement 6 comprises a first recess 15 arranged at the middle of the first arm, and a hole at the front end 17 of the first arm for the first locking pin. The first recess is also provided with a hole (not shown) for the first locking pin. The second lifting arrangement 7 comprises a second recess 16 arranged at the middle of the second arm, and a hole at the front end 18 of the second arm for the first locking pin. The second recess is also provided with a hole (not shown) for the second locking pin. The diameter of the holes corresponds to a locking pin that is used to attach a battery pack to the lifting tool. The holes of the recesses are aligned with the holes at the front ends of the arms. The distance between the recess and the front end of an arm corresponds to the depth of a battery pack.

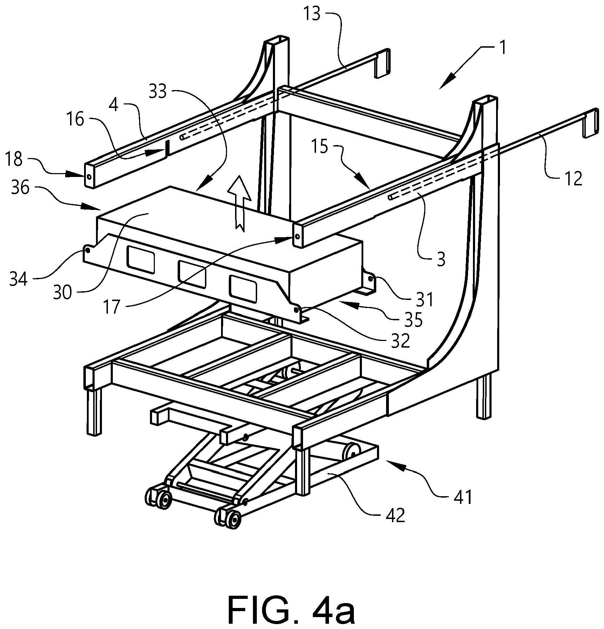

When a battery pack is to be replaced, the battery pack is either raised towards the lifting tool by an external lifting aid, if a new battery is to be attached to the lifting tool, or the lifting tool is lowered towards the battery pack if the battery pack is installed in a vehicle, as shown in Fig. 4a, such that the holes of the connection members are aligned with the lifting openings of the battery pack. One bracket extension of the battery pack will fit in the first recess and the hole of the first recess will be positioned adjacent and aligned with the first outer lifting opening 31 of the battery pack, and the hole at the front end of the first arm will be positioned adjacent and aligned with the first inner lifting opening 32 of the battery pack. Another bracket extension of the battery pack will fit in the second recess and the hole of the second recess will be positioned adjacent and aligned with the second outer lifting opening 33 of the battery pack, and the hole at the front end of the second arm will be positioned adjacent and aligned with the second inner lifting opening 34. By positioning a bracket in a recess, the battery pack is secured in both horizontal directions and the vertical direction.

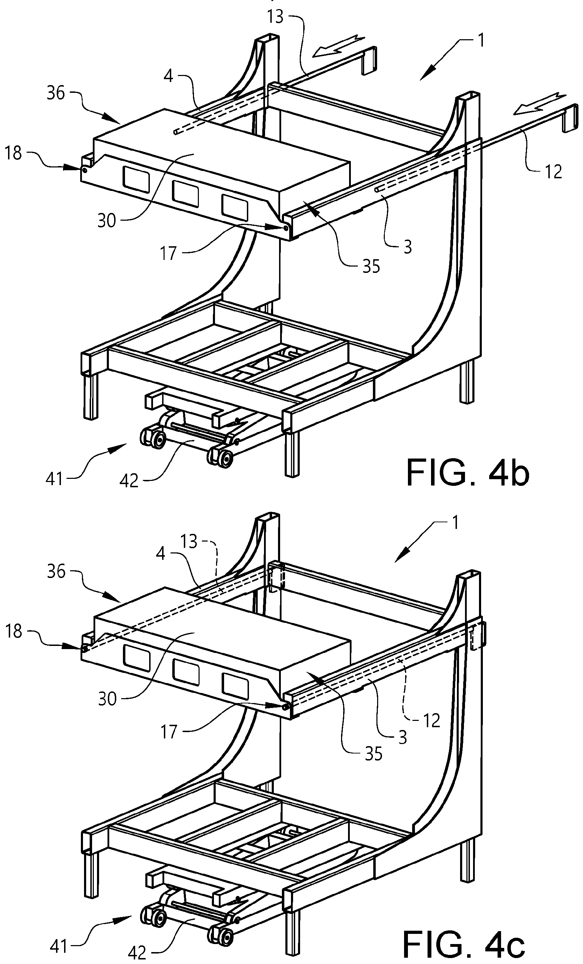

To attach the battery pack to the lifting tool, as shown in Fig. 4b, the first locking pin 12 is inserted through the first outer lifting opening 31, the hole in the first recess, the hole at the front end of the first arm and the first inner lifting opening 32. The second locking pin 13 is inserted through the second outer lifting opening 33, the hole in the second recess, the hole at the front end of the second arm and the second inner lifting opening 33. The locking pins are inserted horizontally from the rear sides of the arms. The battery pack is now securely attached to the lifting tool, as shown in Fig. 4c, and can be moved to the desired position, either out of the vehicle or into the vehicle.

The lifting arms may be attached to the body in a removable manner. In this way, the lifting arms may be attached to the body in different positions, i.e. at different heights, such that the lifting tool is adapted to lift battery packs arranged at different heights in a vehicle. In one example, two battery packs are placed above each other at the rear of a bus. With this lifting tool, both battery packs can be removed or inserted with the same lifting tool.

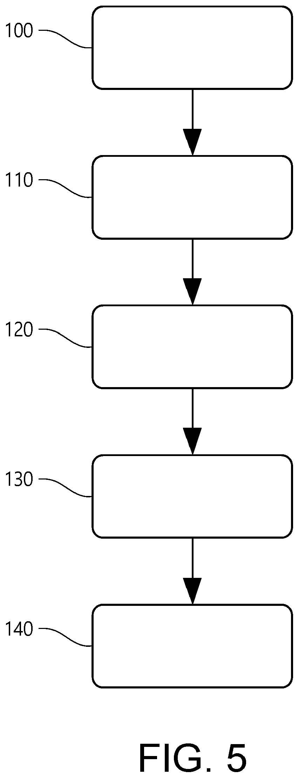

Fig. 5 shows a schematic flow chart of one example of the method for manually removing a battery pack from an electric vehicle with a lifting tool. The lifting tool is attached to a height adjustable lifting aid, such as a forklift or a manually operated pallet loader. In this way, the lifting tool can be adjusted to the actual height of the battery pack that is to be removed.

In step 100, the battery pack is positioned between a first arm and a second arm of the lifting tool when the battery is still positioned in the electric vehicle. The arms of the lifting tool are set to a height that is higher than the lifting height, such that the arms can be inserted on each side of the battery pack. The lifting arrangements of the arms are positioned adjacent and above the lifting openings of each side of the battery pack.

In step 110, the arms of the lifting tool are adjusted in height, in this case lowered, such that the lifting arrangements of the arms are aligned with the lifting openings of each side of the battery pack.

In step 120, a locking pin is inserted horizontally through the lifting arrangements of each arm and the lifting openings of each side of the battery pack. The locking pins are inserted from the outside of the vehicle. This will attach the battery pack to the lifting tool in a secure manner

In step 130, the battery pack is lifted from the support surface of the vehicle with a lifting aid attached to the lifting tool.

In step 140, the battery pack is removed from the vehicle with the lifting aid, by pulling the lifting tool with the battery pack rearwards from the vehicle. The battery pack is now removed from the vehicle, and a new battery can be inserted into the vehicle by reversing the method.

The invention is not to be regarded as being limited to the embodiments described above, a number of additional variants and modifications being possible within the scope of the subsequent patent claims.

### REFERENCE SIGNS

- 1:: Lifting tool
- 2:: Body
- 3:: First arm
- 4:: Second arm
- 5:: Lifting interface
- 6:: First lifting arrangement
- 7:: Second lifting arrangement
- 8:: First outer connection member
- 9:: First inner connection member
- 10:: Second outer connection member
- 11:: Second inner connection member
- 12:: First locking pin
- 13:: Second locking pin
- 14:: Hole
- 15:: First recess
- 16:: Second recess
- 17:: Front end of first arm
- 18:: Front end of second arm
- 19:: First tube
- 20:: Second tube
- 21:: Lower frame

- 30:: Battery pack
- 31:: First outer lifting opening
- 32:: First inner lifting opening
- 33:: Second outer lifting opening
- 34:: Second inner lifting opening
- 35:: First side
- 36:: Second side
- 37:: Bracket

- 41:: Lifting aid
- 42:: Pallet loader

## Claims

1. Lifting tool (1) for replacing a battery pack (30) in an electric vehicle, comprising a body (2) having a lifting interface (5) that is attachable to an external lifting aid (41), further comprising a first arm (3) provided with a first lifting arrangement (6) and a second arm (4) provided with a second lifting arrangement (7), where the battery pack (30) is adapted to be positioned between the arms (3, 4) when the lifting tool (1) is to lift and hold a battery pack (30), **characterized in that** the lifting tool (1) comprises a first locking pin (12) and a second locking pin (13), where the first locking pin (12) is adapted to be inserted horizontally through a first outer connection member (8) and a first inner connection member (9) of the first lifting arrangement (6) and a first outer lifting opening (31) and a first inner lifting opening (32) of a first side (35) of the battery pack (30), and where the second locking pin (13) is adapted to be inserted horizontally through a second outer connection member (10) and a second inner connection member (11) of the second lifting arrangement (7) and a second outer lifting opening (33) and a second inner lifting opening (34) of a second side (36) of the battery pack (30), such that the locking pins (12, 13) secure the battery pack (30) to the lifting tool (1).

2. Lifting tool according to claim 1, **characterized in that** the first lifting arrangement (6) extends downwards from the lower side of the first arm (3) and that the second lifting arrangement (7) extends downwards from the lower side of the second arm (4).

3. Lifting tool according to claim 2, **characterized in that** the outer connection members (8, 10) and the inner connection members (9, 11) of the first respective second lifting arrangement (6, 7) are provided with holes (14) through which the locking pins are to be inserted.

4. Lifting tool according to claim 1, **characterized in that** the first lifting arrangement (6) is incorporated inside the first arm (3) and that the second lifting arrangement (7) is incorporated inside the second arm (4).

5. Lifting tool according to claim 4, **characterized in that** the outer connection members (8, 10) are recesses (15, 16) in the first respective second arms (3, 4) and that the inner connection members (9, 11) are arranged at the front ends (17, 18) of the first respective second arms (3, 4).

6. Lifting tool according to any of claims 1 to 5, **characterized in that** the lifting interface (5) comprises two horizontal longitudinal tubes (19, 20) attachable to the forks of a fork lift, where the forks of the fork lift are adapted to be inserted into the tubes (19, 20) when a battery pack (30) is to be lifted.

7. Lifting tool according to claim 6, **characterized in that** the cross section of the tubes (19, 20) is rectangular.

8. Lifting tool according to any of claims 1 to 5, **characterized in that** the lifting interface (5) comprises a lower frame (21) attachable to a height adjustable pallet loader (42).

9. Lifting tool according to claim 8, **characterized in that** the body (2) of the lifting tool (1) comprises at least two height positions at which the arms (3, 4) can be attached.

10. Lifting tool according to any of claims 1 to 9, **characterized in that** each locking pin (12, 13) comprises a locking member for locking a locking pin (12; 13) to an arm (3; 4).

11. Method for manually removing a battery pack from an electric vehicle with a lifting tool, comprising the following steps:
- placing the battery pack between a first arm and a second arm of the lifting tool when the battery is positioned in the electric vehicle,
- adjusting the arms in height such that lifting arrangements of the arms are positioned adjacent and aligned with lifting openings of each side of the battery pack,
- inserting a locking pin through the lifting arrangements of each arm and the lifting openings of each side of the battery pack,
- lifting the battery pack with a lifting aid attached to the lifting tool,
- removing the battery pack from the vehicle with the lifting aid.
